# EUROPÄISCHE PATENTSCHRIFT

(11) **EP 0 880 722 B1**
(45) Veröffentlichungstag und Bekanntmachung des Hinweises auf die Patenterteilung: **23.01.2002**
(21) Anmeldenummer: 97912211.6
(22) Anmeldetag: 22.10.1997
(51) Int. Cl.: G02B 27/02

(54) **VORRICHTUNG ZUM DARSTELLEN SICH BEWEGENDER BILDER IN HINTEREINANDERLIEGENDEN EBENEN**
DEVICE FOR REPRESENTING MOVING IMAGES IN PLANES LOCATED ONE BEHIND THE OTHER
DISPOSITIF POUR REPRESENTER DES IMAGES EN MOUVEMENT DANS DES PLANS SITUES L'UN DERRIERE L'AUTRE

(30) Priorität: 22.10.1996 DE 29618319 U
(43) Veröffentlichungstag der Anmeldung: 02.12.1998
(73) Patentinhaber: Maass, Uwe, 50996 Köln (DE)
(72) Erfinder: Maass, Uwe, 50996 Köln (DE)
(74) Vertreter: Lenzing, Andreas, Dr.
(86) Internationale Anmeldenummer: EP9705834
(87) Internationale Veröffentlichungsnummer: WO9818114

(56) Entgegenhaltungen:
- WO-A-83/03019
- CH-A- 679 342
- DE-U- 29 515 955
- US-A- 4 671 625

## Beschreibung

Die Erfindung betrifft eine Vorrichtung zum Darstellen zweier sich bewegender Bilder in zwei hintereinanderliegenden Ebenen mit zwei Bildgebern, mit einem unter einem spitzen Winkel im Lichtweg beider Bildgeber liegenden Strahlteiler und unter Verwendung eines Hohlspiegels. Eine derartige Vorrichtung ist aus CH-A-679342 bekannt.

Eine Vorrichtung, die ein Bild freischwebend im Raum darstellt, so daß es dem Betrachter als virtuelles Bild erscheint, ist bekannt (DE-U 295 15 955). In einem Hohlzylinder weist diese Vorrichtung mindestens einen Bildgeber auf, in dessen Lichtweg unter 45° ein Strahlteiler läuft. In der vom Bildgeber abgewandten Seite des Strahlteilers weist der Hohlzylinder ein Sichtfenster auf. Für einen vor dem Sichtfenster befindlichen Betrachter scheint das Bild hinter dem Strahlteiler zu liegen. Der Betrachter sieht nur dieses einzige Bild. Im allgemeinen handelt es sich um ein sich bewegendes, einem Film vergleichbares Bild. Die bekannte Vorrichtung macht von dem physikalischen Prinzip Gebrauch, das jeder Autofahrer an der Windschutzscheibe seines Fahrzeuges erlebt. Ein auf der Ablage vor der Windschutzscheibe liegender Gegenstand spiegelt sich in dieser so, daß er dem Autofahrer - in Fahrtrichtung gesehen - vor der Windschutzscheibe zu liegen scheint. Bei der bekannten Vorrichtung wird der darzustellende Gegenstand vom Bildgeber auf den Strahlteiler geworfen, der der Windschutzscheibe entspricht, und er spiegelt sich dann im Strahlteiler derart, daß er dem Betrachter hinter dem Strahlteiler zu liegen scheint. Der Gegenstand erscheint als virtuelles Bild. Der Betrachter erkennt nicht die Spiegelung am Strahlteiler. Er sieht nur den frei im Raum schwebenden Gegenstand. Bekannt ist weiter eine Vorrichtung (DE 195 29 936 A1), die dem Betrachter ein reales und ein virtuelles Bild eines Gegenstandes vermittelt. Diese Vorrichtung enthält einen Strahlteiler, einen als Spiegel wirkenden Schirm und eine teilweise reflektierende, lichtdurchlässige Platte. Dem Betrachter erscheint das reale Bild vor und das virtuelle Bild hinter dieser Platte.

Der Erfinder hat sich die Aufgabe gestellt, eine Vorrichtung zu schaffen, die zwei verschiedene, sich bewegende Bilder in zwei hintereinanderliegenden Ebenen darstellt. Ausgehend von der eingangs beschriebenen bekannten Vorrichtung ergibt sich die Lösung für diese Aufgabe nach der Erfindung dadurch, daß die beiden Bildgeber unter einem Winkel von 90° zueinander stehen, der Strahlteiler mit seiner einen Seite dem ersten und dem zweiten Bildgeber zugewendet ist und unter einem Winkel von 45° zu deren Längsmittellinien steht, ein Hohlspiegel auf der vom zweiten Bildgeber abgewandten Seite des Strahlteilers im Lichtweg dieses Bildgebers und eine Fresnellinse auf der vom ersten und vom zweiten Bildgeber abgewandten Seite des Strahlteilers im gemeinsamen Lichtweg beider Bildgeber liegt. Der Betrachter schaut über die Fresnellinse und den Strahlteiler auf den sogenannten ersten Bildgeber. Dieser liegt unmittelbar im Blickfeld des Betrachters in der sogenannten hinteren Ebene. Abhängig von der Anwendung der Vorrichtung zeigt dieser Bildgeber zum Beispiel einen belehrenden Film oder auch Werbefilm. Der sogenannte zweite Bildgeber wirft sein Bild durch den Strahlteiler auf den Hohlspiegel. Dieser wirft es auf den Strahlteiler zurück, der es nach einer Drehung um 90° auf die Fresnellinse und damit den Betrachter spiegelt. Dem Betrachter scheint es als frei im Raum schwebendes virtuelles Bild vor der Fresnellinse zu liegen. Abhängig von der Anwendung der Vorrichtung zeigt der zweite Bildgeber bei einem belehrenden Film zum Beispiel eine Lehrperson oder bei einem Werbefilm ein Firmenlogo, die oder das dann im Vordergrund vor dem Film im Hintergrund erscheint. Der Betrachter erlebt damit das seltene Schauspiel, daß er im Hintergrund wie beim Stand der Technik einen Film und vor diesem Hintergrund im Vordergrund frei im Raum schwebend ein virtuelles Bild sieht. Dieses virtuelle Bild entsteht durch das Zusammenwirken von Strahlteiler, Hohlspiegel und Fresnellinse. Die Abmessungen und optischen Daten des Strahlteilers, des Hohlspiegels und der Fresnellinse können so aufeinander abgestimmt werden, daß der Betrachter das virtuelle Bild in einem großen Winkelbereich von bis zu 60° sieht. Das heißt, daß sich der Betrachter vor der Vorrichtung nach links und rechts bewegen kann und das virtuelle Bild ständig sieht.

Wie ausgeführt, zeigt der erste Bildgeber das für den Betrachter in der hinteren und der zweite Bildgeber das für den Betrachter in der vorderen Ebene liegende Bild.

Der Strahlteiler weist zweckmäßig eine Durchlässigkeit von 50 % auf. Es kann sich um eine Glasscheibe handeln. Bei der vorstehend beschriebenen bekannten Vorrichtung besteht der Strahlteiler aus einer straff gespannten Folie. Die Verwendung einer Glasscheibe, die kostengünstiger ist, reicht für die erfindungsgemäßen Zwecke aus. Der Strahlteiler hat eine Kantenlänge von 50 x 50 cm.

Die beiden Bildgeber weisen zweckmäßig Rechteckform mit einer Diagonalen von 6 bis 76 cm auf. Es handelt sich um Fernseh-Bildröhren oder normale Monitore. Sie können auf beliebige Art gesteuert werden. Zweckmäßig werden sie digital angesteuert.

Der Hohlspiegel hat zweckmäßig eine Tauchtiefe von 4 bis 18 cm. Die Fresnellinse weist zweckmäßig eine Tauchtiefenpressung von 6 bis 20 cm auf.

Am Beispiel der in der Zeichnung schematisch gezeigten Ausführungsform wird die Erfindung nun weiter beschrieben.

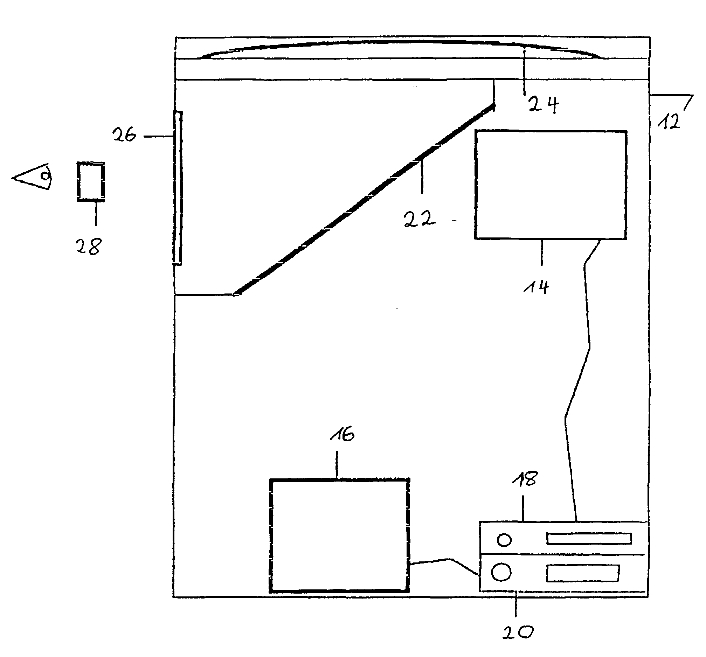

Die Vorrichtung enthält ein Gehäuse 12 und in diesem den ersten Bildgeber 14 und den zweiten Bildgeber 16. Der erste Bildgeber 14 wird von einer Steuervorrichtung oder einem Speicher 18 und der zweite Bildgeber 16 wird von einer Steuervorrichtung oder einem Speicher 20 angesteuert. Ein Strahlteiler 22 liegt im Lichtweg beider Bildgeber 14 und 16. Über dem Strahlteiler 22 und an der Oberseite des Gehäuses 12 befindet sich der Hohlspiegel 24. Vor dem Strahlteiler 22 oder bei Blick auf die Figur links vom Strahlteiler 22 befindet sich die Fresnellinse 26. Vor dieser oder bei Blick auf die Figur links von der Fresnellinse 26 steht frei im Raum schwebend das virtuelle Bild 28.

Vor der Fresnellinse 26 oder bei Blick auf die Figur links von dieser befindet sich der Betrachter. Über die Fresnellinse 26 und den Strahlteiler 22 geht sein Blick unmittelbar zum ersten Bildgeber 14. Dessen Bild sieht er in der Ebene des ersten Bildgebers 14 oder im Hintergrund. Die Fresnellinse 26 oder der Strahlteiler 22 beeinträchtigen den Blick auf den ersten Bildgeber 14 nicht. Anders ist es mit dem vom zweiten Bildgeber 16 abgegebenen Bild. Dieses Bild erscheint dem Betrachter als virutelles Bild 28 vor der Fresnellinse 26 freischwebend im Raum.

Zusätzlich dazu, daß die Vorrichtung zwei sich bewegende Bilder in zwei hintereinanderliegenden Ebenen darstellt, erlebt der Betrachter auch eine Illusion. Die Illusion liegt darin, daß das virtuelle Bild 28 frei im Raum schwebt. Eine Leinwand, ein Bildschirm oder dergleichen ist weder zu sehen noch mit einer Hand zu fassen. Ebensowenig kann der Betrachter das virtuelle Bild fassen.

## Patentansprüche

1. Vorrichtung zum Darstellen zweier sich bewegender Bilder in zwei hintereinanderliegenden Ebenen mit zwei Bildgebern, mit einem unter einem spitzen Winkel im Lichtweg beider Bildgeber liegenden Strahlteiler und unter Verwendung eines Hohlspiegels, **dadurch gekennzeichnet, daß** die beiden Bildgeber (14, 16) unter einem Winkel von 90° zueinander stehen, der Strahlteiler (22) mit seiner einen Seite dem ersten und dem zweiten Bildgeber (14, 16) zugewendet ist und unter einem Winkel von 45° zu deren Längsmittellinien steht, ein Hohlspiegel (24) auf der vom zweiten Bildgeber (16) abgewandten Seite des Strahlteilers (22) im Lichtweg dieses Bildgebers (16) und eine Fresnellinse (26) auf der vom ersten und vom zweiten Bildgeber (14, 16) abgewandten Seite des Strahlteilers (22) im gemeinsamen Lichtweg beider Bildgeber (14, 16) liegt.

2. Vorrichtung nach Anspruch 1, **dadurch gekennzeichnet, daß** der erste Bildgeber (14) das für einen Betrachter in der hinteren Ebene liegende Bild zeigt.

3. Vorrichtung nach Anspruch 1 oder 2, **dadurch gekennzeichnet, daß** der zweite Bildgeber (16) das für einen Betrachter in der vorderen Ebene liegende Bild zeigt.

4. Vorrichtung nach einem der Ansprüche 1 bis 3, **dadurch gekennzeichnet, daß** der Strahlteiler (22) eine Durchlässigkeit von 50 % aufweist.

5. Vorrichtung nach Anspruch 4, **dadurch gekennzeichnet, daß** der Strahlteiler (22) eine Kantenlänge von 50 x 50 cm aufweist.

6. Vorrichtung nach einem der Ansprüche 1 bis 5, **dadurch gekennzeichnet, daß** beide Bildgeber (14, 16) Rechteckform und eine Diagonale von 6 bis 76 cm aufweisen.

7. Vorrichtung nach einem der Ansprüche 1 bis 6, **dadurch gekennzeichnet, daß** der Hohlspiegel (24) eine Tauchtiefe von 4 bis 18 cm aufweist.

8. Vorrichtung nach einem der Ansprüche 1 bis 7, **dadurch gekennzeichnet, daß** die Fresnellinse (26) eine Tauchtiefenpressung von 6 bis 20 cm aufweist.

## Claims

1. Arrangement for showing two moving images in two planes lying one behind the other, having two imaging devices, having a beam splitter situated at an acute angle in the beam path of the two imaging devices, and using a concave mirror, **characterised in that** the two imaging devices (14, 16) are positioned at an angle of 90° to one another, one side of the beam splitter (22) is adjacent the first and second imaging devices (14, 16) and the beam splitter (22) lies at an angle of 45° to their longitudinal centrelines, a concave mirror (24) is situated, on the side of the beam splitter (22) remote from the second imaging device (16), in the beam path of this imaging device (16) and a Fresnel lens is situated, on the side of the beam splitter (22) remote from the first and second imaging devices (14, 16), in the common beam path of the two imaging devices (14, 16).

2. Arrangement according to claim 1, **characterised in that** the first imaging device (14) produces the image which, for a viewer, is situated in the rear plane.

3. Arrangement according to claim 1 or 2, **characterised in that** the second imaging device (16) produces the image which, for a viewer, is situated in the front plane.

4. Arrangement according to any of claims 1 to 3, **characterised in that** the beam splitter (22) has a transparency of 50%.

5. Arrangement according to claim 4, **characterised in that** the beam splitter (22) has an edge length of 50 x 50 cm.

6. Arrangement according to any of claims 1 to 5, **characterised in that** the two imaging devices (14, 16) are rectangular in shape and have a diagonal of from 6 to 76 cm.

7. Arrangement according to any of claims 1 to 6, **characterised in that** the concave mirror (24) has a depth of from 4 to 18 cm.

8. Arrangement according to any of claims 1 to 7, **characterised in that** the Fresnel lens has an impressed depth of from 6 to 20 cm.

## Revendications

1. Dispositif pour représenter deux images en déplacement dans deux plans disposés l'un derrière l'autre, avec deux fournisseurs d'images, un séparateur de rayonnement disposé sous un angle aigu dans le trajet lumineux des deux fournisseurs d'image, et en utilisant un miroir concave, **caractérisé en ce que** les deux fournisseurs d'image (14, 16) sont disposés sous un angle de 90° l'un par rapport à l'autre, le séparateur de rayonnement (22) est tourné avec l'un de ses côtés vers le premier et le deuxième fournisseur d'image (14, 16), et disposé sous un angle de 45° par rapport à leurs axes médians longitudinaux, un miroir concave (24) étant disposé sur le côté du séparateur de rayonnement (22) détourné du deuxième fournisseur d'image (16) et dans le trajet lumineux de ce fournisseur d'image (16), et une lentille de Fresnel (26) étant disposée sur le côté du séparateur de rayonnement (22) détourné du premier et du deuxième fournisseur d'image (14, 16) dans le trajet lumineux commun des deux fournisseurs d'image (14, 16).

2. Dispositif selon la revendication 1, **caractérisé en ce que** le premier fournisseur d'image (14) montre une image située dans le plan postérieur pour un observateur.

3. Dispositif selon l'une ou l'autre des revendications 1 et 2, **caractérisé en ce que** le deuxième fournisseur d'image (16) montre une image située dans le plan antérieur pour un observateur.

4. Dispositif selon l'une des revendications 1 à 3, **caractérisé en ce que** le séparateur de rayonnement (22) présente une transparence de 50 %.

5. Dispositif selon la revendication 4, **caractérisé en ce que** le séparateur de rayonnement (22) présente une longueur de côtés de 50 x 50 cm.

6. Dispositif selon l'une des revendications 1 à 5, **caractérisé en ce que** les deux fournisseurs d'image (14, 16) ont une forme rectangulaire et une diagonale de 6 à 76 cm.

7. Dispositif selon l'une des revendications 1 à 76, **caractérisé en ce que** le miroir concave (24) présente une profondeur de creux de 4 à 18 cm.

8. Dispositif selon l'une des revendications 1 à 7, **caractérisé en ce que** la lentille de Fresnel (26) présente des reliefs avec des profondeurs de 6 à 20 cm.
